Europäisches Patentamt

European Patent Office

Office européen des brevets

(19)

(11) EP 0 623 379 B1

(12) EUROPÄISCHE PATENTSCHRIFT

(45) Veröffentlichungstag und Bekanntmachung des Hinweises auf die Patenterteilung:
27.08.1997 Patentblatt 1997/35

(51) Int. Cl.$^6$: B01D 53/00, B01D 53/34

(21) Anmeldenummer: 94107067.4

(22) Anmeldetag: 05.05.1994

(54) **Verfahren zur Reinigung von Rauchgasen die elementares Quecksilber enthalten**

Process for cleaning flue gases containing elementary mercury

Procédé d'épuration de gaz de fumée contenant du mercure élémentaire

(84) Benannte Vertragsstaaten:
BE CH DE ES FR GB IT LI NL

(30) Priorität: 07.05.1993 DE 4315138

(43) Veröffentlichungstag der Anmeldung:
09.11.1994 Patentblatt 1994/45

(73) Patentinhaber: THYSSEN INDUSTRIE AG
45128 Essen (DE)

(72) Erfinder:
• **Mader, Anton**
D-47239 Duisburg (DE)
• **Eipper, Hartmut, Dr.**
D-42551 Velbert 1 (DE)
• **Strodt, Peter**
46282 Dorsten (DE)
• **Wienands, Thomas, Dr.**
D-45130 Essen (DE)

(74) Vertreter: **Dahlkamp, Heinrich-Leo**
c/o Thyssen Guss AG,
Am Thyssenhaus 1
45128 Essen (DE)

(56) Entgegenhaltungen:
EP-A- 0 235 414        EP-A- 0 254 697
EP-A- 0 278 537        EP-A- 0 405 565
DE-C- 4 241 726

## Beschreibung

Die Erfindung bezieht sich auf ein Verfahren zur Reinigung von Rauchgasen aus Klärschlammverbrennungsanlagen, die elementares Quecksilber enthalten und wobei die $SO_2$-Konzentration die HCl-Konzentration im Rauchgas um ein Vielfaches überschreitet.

Bei der nassen Rauchgaswäsche zur Abscheidung von $SO_2$, HCl, Staub usw. hinter Klärschlammverbrennungsanlagen (zum Teil auch hinter Müllverbrennungs- oder anderen Abfallverbrennungsanlagen) bereitet die simultane Abscheidung von Quecksilber auf den zulässigen Emissionsgrenzwert Probleme. Während das ionische Quecksilber ausreichend gut aus dem Rauchgas entfernt werden kann, wird das gewöhnlich zu einem beträchtlichen Anteil vorliegende metallische oder elementare Quecksilber ohne Zusatzmaßnahmen nur unwesentlich bzw. nicht ausreichend abgeschieden.

Üblicherweise werden bei Müllverbrennungsanlagen zunächst in einer ein- oder zweistufigen Waschstufe saure Gase, Staub usw. abgeschieden, wobei die Gestaltung des Waschprozesses von der Art der Abwasserreinigung bzw. -verwertung oder -rückgewinnung eventueller Reststoffe abhängt. Die Erfahrungen haben dabei gezeigt, daß neben sauren Schadstoffen auch Quecksilber in erheblichem Umfang in dieser sauren Waschstufe abgeschieden wird. Die chemisch-verfahrenstechnische Ursache ist hierbei darin zu sehen, daß das Quecksilber nach der Feuerung mit dem Chlorwasserstoff der Rauchgase Quecksilber-II-Chlorid ($HgCl_2$) bildet, entweder an Staub angelagert oder in der Waschlösung absorbiert wird und als ionisches Quecksilber und Chlorid in Lösung geht. Sofern die Waschflüssigkeit genügend sauer gehalten wird, wird $SO_2$ nicht oder nur in geringfügigem Umfang absorbiert, so daß eine Sulfit-Bildung mit entsprechend reduzierendem Potential im Waschwasser vermieden wird. Danach gelingt es nicht nur, Quecksilber in erheblichem Umfang abzuscheiden, sondern auch die Bildung von Quecksilber niedrigerer Oxidationsstufe in der Waschflüssigkeit, insbesondere die Bildung des metallischen Quecksilbers, weitgehend zu unterdrücken. Das $SO_2$ wird bei diesem bekannten Verfahren erst in einer nachfolgenden Waschstufe durch basische Reagenzien, wie z.B. Kalziumhydroxid, Kalkstein oder Natronlauge, bei pH-Werten > 5 aus dem Rauchgas entfernt.

Es hat sich nun herausgestellt, daß mit diesem bekannten Verfahren nur dann ein hinreichend niedriger Quecksilbergehalt im Abgas erreicht werden kann, wenn wie z.B. bei der Müllverbrennung die HCl-Konzentration wesentlich höher liegt als die $SO_2$-Konzentration. Bei einer Schlammverbrennung liegen die Verhältnisse aber genau umgekehrt: Hier übersteigt die $SO_2$-Konzentration die HCl-Konzentration im Rauchgas um ein Vielfaches. Diese Rauchgaszusammensetzung führt offenbar dazu, daß nach der Verbrennung die Umsetzung des Quecksilbers mit Chlorwasserstoff bei weitem nicht vollständig verläuft, so daß der Anteil des elementaren Quecksilbers an der gesamten Quecksilberkonzentration auf Werte bis über 50 % ansteigen kann. Dieser Quecksilberanteil wird fast überhaupt nicht in der Waschanlage absorbiert, z. T. wird er durch Reduktionsvorgänge sogar noch erhöht. Hierbei wirkt sich zusätzlich aus, daß infolge der niedrigen HCl-Konzentration die Waschstufe oftmals nicht aus dem Rauchgas mit der nötigen Azidität beaufschlagt wird, so daß ein niedriger pH-Wert (< 2) entweder nicht oder nur durch zusätzliche Zugabe von Salzsäure erreicht wird (siehe z.B. EP-A-0 254 627).

Bei Quecksilberkonzentrationen, z.B. nach Schlammverbrennungsanlagen, in der Größenordnung von einigen hundert Mikrogramm ergibt sich daher, daß die heutigen verschärften Grenzwertanforderungen mit dieser üblichen Anlagentechnik nicht eingehalten werden. Hierzu werden vielmehr Zusatzaggregate auf der Basis von Aktivkokstechnik vorgeschlagen (Festbett-Aktivkoksadsorber oder Flugstromverfahren), mit denen die vorgeschriebenen Grenzwerte unterschritten werden können (vgl. Chem.-Ing.-Techn. 1992, Nr. 10, S. 963-964). Diese Verfahren sind jedoch mit dem Nachteil behaftet, daß zusätzliche Komponenten in den Rauchgasweg eingebracht werden müssen, die Investitions- und Betriebskosten verursachen sowie einen erheblichen Platzbedarf haben.

Aus der EP 0 179 040 B1 ist ein Verfahren zur Reinigung von quecksilberhaltigem Gas und zur Gewinnung von Quecksilber in Metallformen bekannt, bei dem metallisches dampfförmiges Quecksilber in dem Gas mit zweiwertigen Quecksilber-Chloridverbindungen ($HgCl_2$) in einer flüssigen Phase umgesetzt wird und einwertiges Quecksilber-Chlorid ($Hg_2Cl_2$) ausgefällt wird, im Teilstorm abgeschlemmt und außerhalb des Wäschers separiert und entweder elektrolytisch oxidiert oder durch Oxidationsmittel, wie Chlorgas, wieder zu $HgCl_2$ regeneriert wird. Ein Teil des $HgCl_2$ wird dabei wieder in den Wäscher zurückgeführt, um eine hohe Konzentration an zweiwertigen Quecksilberionen einzustellen.

Der Erfindung liegt die Aufgabe zugrunde, ein Verfahren zur Reinigung von Rauchgasen aus Abfall-, insbesondere Klärschlammverbrennungsanlagen, die elementares Quecksilber enthalten, vorzuschlagen, bei dem auch hohe Quecksilberkonzentrationen nach den Verbrennungsanlagen im Naßwaschverfahren ohne Zusatzaggregate auf der Basis von Aktivkokstechnik und ohne die aufwendige Regeneration des $Hg_2Cl_2$ abgeschieden werden können.

Zur Lösung dieser Aufgabe werden die im Kennzeichen des Anspruchs 1 angegebenen Merkmale vorgeschlagen. Die Unteransprüche 2 bis 6 enthalten sinnvolle ergänzende Verfahrensvorschläge.

Erfindungsgemäß wird eine gegenüber dem Stand der Technik veränderte Anordnung der Waschstufen vorgeschlagen, die jedoch auf die Anwendung von zusätzlichen Absorptionseinrichtungen verzichtet. Es hat sich nämlich überraschenderweise gezeigt, daß auch die Abscheidung von elementaren Quecksilbern in wässrigen Absorptionsflüssigkeiten möglich ist, sofern ein hohes Oxidationspotential in der Lösung eingestellt wird. Dieser Effekt läßt sich dadurch verwirklichen, daß vor dieser Absorptionsstufe alle reduzierenden Substanzen, insbesondere $SO_2$, fast vollständig aus dem Rauchgas entfernt werden. Dazu wird erfindungsgemäß zunächst eine ein- oder mehrstufige alkalische $SO_2$-Waschstufe vorgesehen und anschließend eine saure Waschstufe nachgeschaltet zur Abscheidung des Quecksilbers. Der nachgeschalteten Waschstufe wird also ein Rauchgas zugeführt, das weitgehend von sauren Schadgasen, wie HCl, HF, $SO_2$ und auch vom Staub befreit ist, wobei jedoch ein erhöhter Anteil an elementarem Quecksilber im Rauchgas in Kauf genommen wird, der in dieser alkalischen Waschstufe zusätzlich gebildet worden ist.

Die oxidierende Absorption in der nachgeschalteten Waschstufe wird wiederum durch die Einstellung eines sauren pH-Wertes (vorzugsweise unter 5) gewährleistet, wobei dieser zweckmäßigerweise durch Zudosierung von chloridhaltigen Chemikalien wie z.B. HCl geschieht, da infolge der fast vollständigen Abwesenheit saurer Schadgase der pH-Wert der Waschflüssigkeit nicht von selbst ausreichend absinkt. Durch Zugabe von Oxidationsmitteln wird erfindungsgemäß eine Umwandlung des teilweise abgeschiedenen elementaren Quecksilbers in ionisches Quecksilber und damit eine Verbesserung der Absorption des elementaren Quecksilbers in der Waschflüssigkeit bewirkt. Eine weitere Verbesserung läßt sich dadurch erreichen, daß der Waschflüssigkeit in der nachgeschalteten Stufe Quecksilber-II-Chlorid ($HgCl_2$) zugegeben wird. Es hat sich gezeigt, daß auch hierdurch eine Verbesserung der Abscheidung des elementaren Quecksilbers erfolgt, weil dieses durch Komproportionierung teilweise in einwertiges Quecksilber übergeht, das wiederum gut in der Waschflüssigkeit absorbiert wird nach der Formel:

$$Hg(O) + HgCl_2 \rightarrow Hg_2Cl_2.$$

Wegen der oxidativen Wirkung der Waschflüssigkeit muß das Wäschermaterial stabil gegen oxidierende Substanzen sein. Gut geeignet ist hierfür GFK, das entsprechend modifiziert werden kann.

Da bei der vorgeschlagenen Anordnung die letzte Waschstufe sehr sauer gefahren wird, kann es günstig sein, eine zusätzliche Tropfenabscheidung vorzusehen, um einen Mitriß saurer Tropfen mit dem Rauchgas in den Kamin zu verhindern. In extremen Fällen muß nochmals eine weitere Waschstufe vorgesehen werden, die im neutralen pH-Bereich betrieben wird.

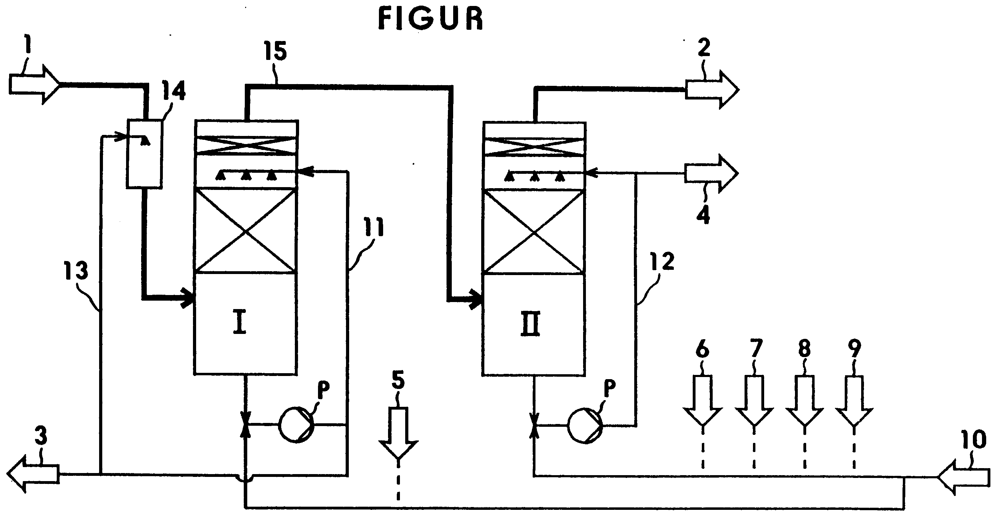

Die Erfindung wird anhand der beigefügten Figur beispielsweise näher erläutert.

Das ungereinigte Rauchgas 1 aus der Klärschlammverbrennung wird in dem Vorwäscher 14 mit Kreislaufwasser 13 gekühlt und weitgehend von Staub befreit und gelangt anschließend in den unteren Bereich der ersten alkalischen Waschstufe I, in der die reduzierenden Rauchgasbestandteile, hauptsächlich $SO_2$, weitgehend entfernt und mit der Abschlämmung 3 ausgeschleust werden. Dem mit der Pumpe P im Kreislauf geführten Kreislaufwasser 11 werden entsprechende Mengen an Zusatzwasser 10 und Lauge 5 zugegeben. Über Leitung 15 wird vorgereinigtes, von reduzierenden Bestandteilen weitgehend befreites Rauchgas dem Wascher II zugeführt, so daß dort keine Reduktions- und Disproportionierungsreaktionen mehr auftreten. Das im Rauchgas enthaltene oder über 8 eigens zugegebene $HgCl_2$ oxidiert in diesem nachgeschalteten Wascher II das metallische Quecksilber und über 2 kann gereinigtes Rauchgas in die Atmosphäre geführt werden.

Mit dem erfindungsgemäßen Verfahren werden gleichzeitig metallisches und ionisches Quecksilber aus dem Rauchgas abgeschieden. Bei den aufgrund des Sauerstoffüberschusses im Rauchgas vorherrschenden oxidierenden Bedingungen kann unter Anwesenheit von Chloriden das einwertige Quecksilberchlorid innerhalb des Wäschers II in der Flüssigphase zu zweiwertigem oxidiert werden.

Bei erhöhtem Quecksilberchloridgehalt im Rauchgas ist ein höherer Chloridgehalt im Waschwasser zur Abscheidung notwendig. Im umgekehrten Fall ist ein niedrigerer Chloridgehalt besser, da das zur Hg(O)-Oxidation benötigte $HgCl_2$ nicht zu stark komplexgebunden werden soll. Die Chloridkonzentration kann durch Zugabe von chloridhaltigen Chemikalien 6, z.B. NaCl, HCl, ins Waschwasser eingestellt werden. Die Einstellung eines leicht sauren pH-Wertes von < 5 durch Säurezugabe 9, z.B. HCl, erfolgt, um eine Fällung des benötigten $HgCl_2$ bei höheren pH-Werten zu vermeiden. Ist kein $HgCl_2$ im Rauchgas vorhanden bzw. ist die Konzentration zu gering, so kann zum Start der Oxidationsreaktionen über 8 $HgCl_2$ (Sublimat) anfänglich zugegeben werden.

Falls die oxidierenden Bedingungen in der 2. Stufe nicht ausreichend sind, können über 7 Oxidationsmittel, z.B. $O_2$, $H_2O_2$, NaOCl usw. zugegeben werden. Das überschüssige Quecksilber wird wie die anderen Schadstoffe mit der Abschlämmung 3,4 aus beiden Wäschern entfernt und einer Abwasserbehandlung zugeführt. Sämtliche Zusatzstoffe 6, 7, 8 und 9 werden gemeinsam mit dem Zusatzwasser 10 über die Pumpe P und die Leitung 12 direkt oder indirekt dem Wäscher II zugeleitet.

Die Wäscher werden vorzugsweise mit großen Stoffaustauschflächen und hohem Flüssigkeit/Gas-Verhältnis ausgeführt, um eine möglichst weitgehende Abscheidung zu erzielen. Anstelle von Chlorid können auch andere Halogenid-Ionen, wie Bromid-und Jodid-Ionen, verwendet werden. Die Waschstufe II kann vorzugsweise auch mehrstufig ausgebildet sein.

**Bezugszeichenliste**

| 1 | ungereinigtes Rauchgas aus der Verbrennung |
|---|---|
| 2 | gereinigtes Rauchgas |
| 3, 4 | Abschlämmung |

5 Lauge
6 Chloride
7 Oxidationsmittel
8 HgCl$_2$
9 Säure
10 Zusatzwasser
11, 12, 13 Kreislaufwasser
14 Vorwäscher
15 vorgereinigtes Rauchgas
I erste alkalische Waschstufe
II zweite saure Waschstufe
P Pumpe

**Patentansprüche**

1. Verfahren zur Reinigung von Rauchgasen aus Klärschlammverbrennungsanlagen, die elementares Quecksilber enthalten und wobei die SO$_2$-Konzentration die HCl-Konzentration im Rauchgas um ein Vielfaches überschreitet, **dadurch gekennzeichnet**, daß aus den Rauchgasen in einem ein- oder mehrstufigen Waschsystem in alkalischer Lösung SO$_2$ und andere saure Schadgase und in einer nachgeschalteten Waschstufe mit einer wässrigen, sauren Lösung, vorzugsweise mit einem pH-Wert unter 5, elementares Quecksilber abgeschieden wird.

2. Verfahren nach Anspruch 1, **dadurch gekennzeichnet**, daß der nachgeschalteten Waschstufe Chloride, vorzugsweise NaCl, HCl oder, FeCl$_3$ zugegeben werden.

3. Verfahren nach Anspruch 1 oder 2, **dadurch gekennzeichnet**, daß der nachgeschalteten Waschstufe in der Anlaufphase Oxidationsmittel, vorzugsweise HgCl$_2$ Natriumhypochlorit, Wasserstoffperoxid, zugegeben werden.

4. Verfahren nach mindestens einem der vorhergehenden Ansprüche, **dadurch gekennzeichnet**, daß der nachgeschaltenen Waschstufe eine weitere Waschstufe zur Verminderung des HCl-Emissionswertes auf > 10 mg/cbm im Normzustand nachgeschaltet wird,

5. Verfahren nach mindestens einem der vorhergehenden Ansprüche, **dadurch gekennzeichnet**, daß die in den Waschstufen gereinigten Rauchgase vor Einleitung in die Atmosphäre durch einen Tropfenabscheider geleitet werden.

6. Verfahren nach mindestens einem der Ansprüche 1, 3, 4 oder 5, **dadurch gekennzeichnet**, daß der nachgeschalteten Waschstufe Bromid- und Jodid-Ionen zugegeben werden.

**Claims**

1. Process for cleaning flue gases evolving from sewage sludge incineration plants and containing elementary mercury, with their SO$_2$ concentration exceeding the HCl concentration in flue gas by a multiple, **characterized in that** SO$_2$ and other acid contaminant gases are separated from the flue gases in a single or multiple-stage scrubber system in an alkaline solution and that elementary mercury is separated downstream in a scrubbing stage with a hydrous acid solution, preferably with a pH-value under 5.

2. Process pursuant to Claim 1, **characterized in that** chlorides, preferably NaCl, HCl, or FeCl$_3$ are added to the scrubbing stage downstream.

3. Process pursuant to Claim 1 or 2, **characterized in that** that oxidation agents, preferably HgCl$_2$ sodium hypochlorite, hydrogen peroxide are added to the scrubbing stage downstream during the start-up phase.

4. Process pursuant to at least one of the preceding claims, **characterized in that** a further scrubbing stage is installed behind the scrubbing stage downstream in order to reduce the HCl emission value down to > 10 mg/cbm in normal status.

5. Process pursuant to at least one of the preceding claims, **characterized in that** the flue gases cleaned in the scrubbing stages are conducted through a mist eliminator prior to their evacuation into the atmosphere.

6. Process pursuant to at least one of the Claims 1, 3, 4 or 5, **characterized in that** that bromide and iodide ions are added to the scrubbing stage downstream.

**Revendications**

1. Procédé d'épuration de gaz de fumée provenant d'usines d'incinération de boues de curage et contenant du mercure élémentaire, la concentration en SO$_2$ dépassant de plusieurs fois la concentration en HCl dans les fumées, **caractérisé en ce que** dans un système de lavage à un ou plusieurs étages, du SO$_2$ et d'autres gaz acides nocifs sont séparés des fumées dans une solution alcaline et que du mercure élémentaire est séparé dans un niveau de lavage en aval avec une solution aqueuse acide, de préférence avec une valeur pH inférieure à 5.

2. Procédé selon la revendication 1, **caractérisé en ce que** du chlorure, de préférence NaCi, HCl ou FeCl$_3$ est ajouté dans l'étage de lavage en aval.

3. Procédé selon la revendication 1 ou 2, **caractérisé en ce que** dans la phase de démarrage, un agent d'oxydation est ajouté dans l'étage de lavage en aval, de préférence hypochloride de sodium HgCl2, peroxyde d'hydrogène.

4. Procédé selon au moins l'une des revendications précédentes, **caractérisé en ce qu'**un étage de lavage suivant est ajouté à l'étage de lavage en aval afin de réduire la valeur d'émission HCl à > 10 mg/cbm à l'état normalisé.

5. Procédé selon au moins l'une des revendications précédentes, **caractérisé en ce que** les gaz de fumée épurés dans les étages de lavage sont acheminés dans un séparateur de gouttes avant d'être évacués dans l'atmosphère.

6. Procédé selon au moins l'une des revendications 1, 3, 4 ou 5, **caractérisé en ce que** des ions de bromure et d'iodure sont ajoutés dans l'étage de lavage en aval.

# FIGUR

EP 0 623 379 B1